# EUROPÄISCHE PATENTANMELDUNG

(11) **EP 1 519 096 A1**
(43) Veröffentlichungstag der Anmeldung: **30.03.2005**
(21) Anmeldenummer: 04021762.2
(22) Anmeldetag: 14.09.2004
(51) Int. Cl.: F16L 37/088, F16L 25/00

(54) **Druckdichte Verbindung zwischen einem Wellrohr oder einem Verbindungsteil und einem Anschlussteil**

(30) Priorität: 25.09.2003 DE 20314842 U
(71) Anmelder: BBT Thermotechnik GmbH, 35576 Wetzlar (DE)
(72) Erfinder: Döring, Heinz, 48493 Wettringen (DE); Köbbemann-Rengers, Ralf, 48493 Wettringen (DE); Lüke, Wolfgang, 48282 Emsdetten (DE)

(57) **Zusammenfassung**

Die Erfindung betrifft eine druckdichte Verbindung zwischen einem Wellrohr (1) oder einem Verbindungsteil (11) mit einer einem Wellrohr ähnlichen Geometrie und einem Anschlussteil (2), insbesondere für Sammel- oder Anschlussleitungen von Sonnenkollektoren. Dabei bildet das Anschlussteil (2) das Ende einer im Sonnenkollektor angeordneten Sammelleitung und greift in das Wellrohr ein. Mindestens ein O-Ring ist als Dichtung vorgesehen.

Aufgabe der Erfindung ist es, eine einfach aufgebaute und leicht zu montierende druckdichte Verbindung zwischen einem Wellrohr (1) oder einem Verbindungsteil (11) und einem Anschlussteil (2), insbesondere für Sammel- oder Anschlussleitungen von Sonnenkollektoren, zu schaffen.

Erfindungsgemäß ist daher vorgesehen, dass das Anschlussteil (2) einen zylindrischen, dem Wellrohr (1) oder dem Verbindungsteil (11) zugeordneten Verbindungsbereich besitzt, welcher auf der vom freien Ende entfernten Seite mit einer Nut (3) zur Aufnahme eines Sicherungsringes (4, 7) oder einem umlaufenden Bund (10) versehen ist, und dass in mindestens zwei nach innen offene Wellen im Endbereich des Wellrohres (1) oder des Verbindungsteils (11) jeweils ein O-Ring (6) als Dichtung eingelegt ist.

## Beschreibung

Die Erfindung betrifft eine druckdichte Verbindung zwischen einem Wellrohr oder einem Verbindungsteil mit einer einem Wellrohr ähnlichen Geometrie und einem Anschlussteil, insbesondere für Sammel- oder Anschlussleitungen von Sonnenkollektoren, gemäß dem Oberbegriff des Schutzanspruches 1.

Solaranlagen bestehen aus mindestens einem Sonnenkollektor, der über einen Wärmeträgerflüssigkeitskreislauf mit einer Umwälzpumpe mit einem Wärmespeicher in Verbindung steht. Ein Sonnenkollektor wird über Anschlussleitungen, welche beispielsweise flexibel durch die Dacheindeckung geführt werden müssen, in den Wärmeträgerflüssigkeitskreislauf eingebunden. Er besitzt mindestens einen rohrförmigen Kanal für die Wärmeträgerflüssigkeit, welcher in wärmeleitendem Kontakt mit einem Absorberblech für die Solarstrahlung steht und in der Regel mit diesem verlötet ist. Dabei ist der rohrförmige Kanal an Sammelleitungen zur Zu- und Ableitung der Wärmeträgerflüssigkeit angeschlossen. Die Sammelleitungen durchdringen an mindestens zwei Stellen die Kollektorwanne bzw. den Kollektorrahmen. Je nach Warmwasserbedarf, Anlagensituation oder Betriebsbedingungen werden mehrere Sonnenkollektoren miteinander zu einem sogenannten Kollektorfeld über die Sammelleitungen verbunden. Meistens wurden dabei seither kurze Schlauchstücke über die als Schlauchtüllen ausgebildeten Enden der Sammelleitungen gezogen und mit Schlauchschellen fixiert oder es kamen metallisch-konisch dichtende Verschraubungen zum Einsatz. Besonders wichtig bei einer gattungsgemäßen, druckdichten Verbindung ist deren Flexibilität sowie die einfache Montage.

Der Erfindung liegt daher die Aufgabe zu Grunde, eine einfach aufgebaute und leicht zu montierende druckdichte Verbindung zwischen einem Wellrohr oder einem Verbindungsteil und einem Anschlussteil, insbesondere für Sammel- oder Anschlussleitungen von Sonnenkollektoren, zu schaffen.

Erfindungsgemäß wurde dies mit den Merkmalen des Schutzanspruches 1 gelöst. Vorteilhafte Weiterbildungen sind den Unteransprüchen zu entnehmen.

Gekennzeichnet ist die druckdichte Verbindung zwischen einem Wellrohr oder einem Verbindungsteil mit einer einem Wellrohr ähnlichen Geometrie und einem Anschlussteil dadurch, dass das Anschlussteil einen zylindrischen, dem Wellrohr oder dem Verbindungsteil zugeordneten Verbindungsbereich besitzt, welcher auf der vom freien Ende entfernten Seite mit einer Nut zur Aufnahme eines Sicherungsringes oder einem umlaufenden Bund versehen ist. Zudem ist in mindestens zwei nach innen offene Wellen im Endbereich des Wellrohres oder des Verbindungsteils jeweils ein O-Ring als Dichtung eingelegt.

Das Wellrohr besitzt durch eine Anformung ein flanschartiges Ende, mit dem es an einem Sicherungsring in der Nut des Anschlussteils in axialer Richtung anliegt. Eine Halteklammer übergreift mindestens das flanschartige Ende des Wellrohres zusammen mit dem Sicherungsring oder dem Bund und fixiert die Bauteile am Anschlussteil. Ergänzend dazu kann die Halteklammer aber auch breiter ausgeführt sein und noch weitere Wellen des Wellrohres übergreifen. Vorzugsweise ist in der ersten und zweiten Welle am Ende des Wellrohres jeweils ein O-Ring als Dichtung eingelegt. Der symmetrisch gestaltete Sicherungsring ist federnd ausgebildet und weist gegenüber seiner einseitigen Öffnung einen geringeren, elastischeren Querschnitt als in den übrigen Bereichen auf.

Die Halteklammer ist symmetrisch und annähernd U-förmig gestaltet und an beiden Schenkeln mit Durchbrechungen zum Übergreifen von Wellrohrende und Sicherungsring versehen. An jedem Schenkelende der Halteklammer befinden sich nach außen gerichtete Abwinklungen und der mittlere Bereich jedes Schenkels ist auf einem Teilstück etwa dem Radius von Wellrohr und Anschlussteil angepasst, so dass er auf deren Mantelfläche aufliegt.

Bei einer weiteren Ausführungsvariante ist in der ersten Welle am Ende des Wellrohres ein Sicherungsring von innen her eingelegt und der Nut am Anschlussteil zugeordnet. In diese rastet er federnd ein und fixiert das Wellrohr am Anschlussteil. Dabei wird vorzugsweise in der zweiten und dritten Welle jeweils ein O-Ring als Dichtung eingelegt. Der symmetrisch gestaltete Sicherungsring erstreckt sich über einen Kreisbogen von etwa 240 Grad, so dass er den Durchmesser des Anschlussteils innerhalb der Nut sicher einfasst. Gegenüber von seiner Öffnung besitzt er einen geringeren, elastischeren Querschnitt in Form einer Abflachung auf der Außenseite, um ein Verschieben in radialer Richtung innerhalb der Welle zu ermöglichen.

Statt in der ersten Welle am Ende eines Wellrohres kann ein Sicherungsring auch von innen her in ein Verbindungsteil, welches den Übergang zu einem Wellrohr oder Schlauch als Anschlussleitung zum Zu- und Ableiten der Wärmeträgerflüssigkeit bildet, eingelegt sein. Dadurch kann das Verbindungsteil nach dem gleichen Prinzip wie ein Wellrohr am Anschlussteil befestigt werden, denn dass das Verbindungsteil ist an einem Ende an einer Rohrleitung fixiert und am anderen, dem Anschlussteil zugeordneten Ende, besitzt es einen Anschlussbereich, welcher aus einer einem Wellrohr ähnlichen Innengeometrie mit mindestens zwei ringförmigen Nuten sowie aus einer ringförmigen Nut auf dem Außenumfang besteht. Vorzugsweise sind in die mindestens zwei inneren Nuten O-Ringe als Dichtung eingelegt.

Da für ein Kollektorfeld nur zwei Anschlussleitungen zum Zu- und Ableiten der Wärmeträgerflüssigkeit nötig sind, müssen die freien äußeren Enden der Sammelleitungen, also jeweils mindestens ein Anschlussteil auf einer Seite eines Sonnenkollektors, verschlossen werden. Dazu kann das Verbindungsteil als Stopfen ausgeführt sein. Es besteht dann ausschließlich aus einem Anschlussbereich, welcher auch die einem Wellrohr ähnliche Innengeometrie mit mindestens zwei ringförmigen Nuten in einem Sackloch sowie eine ringförmige Nut auf dem Außenumfang aufweist.

Eine federnde Halteklammer, insbesondere mit einer Aussparung zwischen äußeren Stegen, übergreift außen am Anschlussteil den zugeordneten Sicherungsring oder den Bund sowie am Verbindungsteil den Anschlussbereich. Dabei ist ein äußerer Steg der Halteklammer der ringförmigen Nut auf dem Außenumfang des Verbindungsteils zugeordnet, so dass eine axiale Sicherung entsteht.

Mit der erfindungsgemäßen Anordnung wird eine einfach aufgebaute und leicht zu montierende druckdichte Verbindung zwischen einem Wellrohr und einem Anschlussteil, insbesondere für Sammelleitungen von Sonnenkollektoren, geschaffen. Dasselbe Anschlussstück kann wegen der identischen Nutgestaltung sowohl mit einem in die Nut eingelegten Sicherungsring in Kombination mit einer Halteklammer als auch mit einem in der ersten Welle am Ende des Wellrohres befindlichen, fedemden Sicherungsring eingesetzt werden.

Weiterhin muss das Anschlussteil kein separates Drehteil sein, denn es kann durch Umformen auch die neuerungsgemäße Gestaltung direkt an den Enden der Sammelleitungen von Sonnenkollektoren angebracht werden, zumal es sich dabei in der Regel um Kupferrohre handelt.

Weil zum Herstellen oder Lösen der erfindungsgemäßen Verbindung keine Werkzeuge angesetzt werden müssen, können die Anschlussbereiche von Sonnenkollektoren generell sehr kompakt gestaltet werden. Beispielsweise ragen dann die Enden der Sammelleitungen unterhalb von Rahmen und Glasabdeckung aus den Sonnenkollektoren, so dass jeweils zwei Sonnenkollektoren mit ihren Rahmen sehr dicht aneinander positioniert werden können. Dabei sind die Anschlussbereiche bzw. Verbindungen aber trotzdem immer noch gut von den Stirnseiten der Sonnenkollektoren her zu erreichen.

Die Zeichnung stellt ein Ausführungsbeispiel der Erfindung dar. Es zeigt:

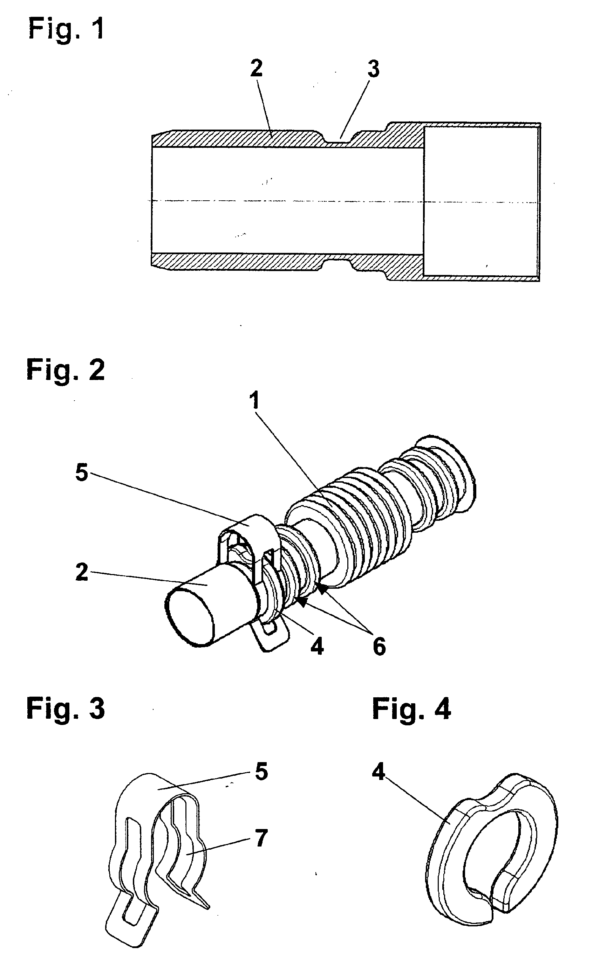

- Fig. 1:: ein Anschlussteil mit einer Nut im Schnitt,
- Fig. 2:: eine Verbindung mit Anschlussteil, Wellrohr, Sicherungsring und Halteklammer in einer perspektivischen Darstellung,
- Fig. 3:: eine Halteklammer in einer perspektivischen Darstellung,
- Fig. 4:: einen Sicherungsring zur Verwendung zusammen mit einer Halteklammer in einer perspektivischen Darstellung,
- Fig. 5:: eine Verbindung mit einem in eine Welle eines Wellrohres eingefügten Sicherungsring in einer perspektivischen Darstellung,
- Fig. 6:: eine Verbindung mit einem in eine Welle eines Wellrohres eingefügten Sicherungsring im Querschnitt,
- Fig. 7:: einen Sicherungsring zum Einfügen in eine Welle eines Wellrohres in einer perspektivischen Darstellung,
- Fig. 8:: ein Anschlussteil mit einem Bund im Schnitt,
- Fig. 9:: ein an einem Ende an einem Wellrohr fixiertes Verbindungsteil als Bogen im Schnitt,
- Fig. 10:: ein gerades Verbindungsteil im Schnitt,
- Fig. 11:: ein Verbindungsteil als Stopfen im Schnitt und
- Fig. 12:: eine Halteklammer in einer perspektivischen Darstellung.

Die druckdichte Verbindung für Sammelleitungen von Sonnenkollektoren wird zwischen einem Wellrohr 1 als Verbindungsstück und einem Anschlussteil 2 hergestellt. Dabei greift das Anschlussteil 2 mit einem zylindrischen Verbindungsbereich in das Wellrohr 1 ein und ist auf der vom freien Ende entfernten Seite mit einer Nut 3 zur Aufnahme eines Sicherungsringes 4 versehen.

Bei einer ersten Ausführungsvariante der Verbindung besitzt das Wellrohr 1 ein angeformtes flanschartiges Ende, welches an einem Sicherungsring 4 in der Nut 3 des Anschlussteils 2 in axialer Richtung anliegt. Eine Halteklammer 5 übergreift das flanschartige Ende des Wellrohres 1 zusammen mit dem Sicherungsring 4, und in der ersten und zweiten Welle am Ende des Wellrohres 1 ist jeweils ein O-Ring 6 als Dichtung eingelegt. Die Halteklammer 5 besitzt einen symmetrischen und annähernd U-förmigen Aufbau. Die Breite der Durchbrechungen 7 an beiden Schenkeln ist auf die Dicke von Wellrohrende und Sicherungsring 4 abgestimmt.

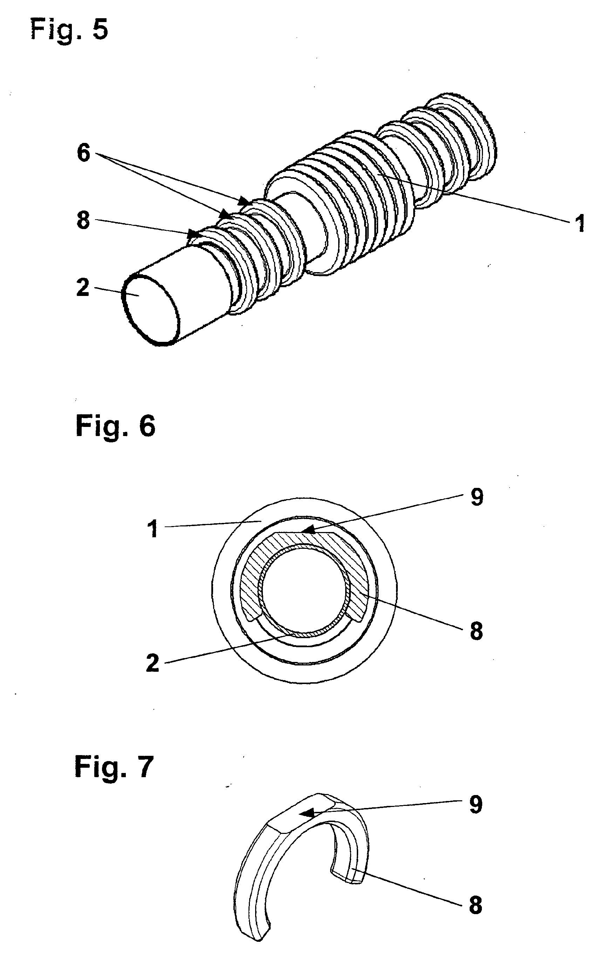

Bei einer weiteren Ausführungsvariante ist gemäß den Fig. 5, 6 und 7 in der ersten Welle am Ende des Wellrohres 1 ein federnd einrastender Sicherungsring 8 von innen her eingelegt, der Nut 3 am Anschlussteil 2 zugeordnet, und in der zweiten sowie dritten Welle befindet sich jeweils ein O-Ring 6 als Dichtung. Der symmetrisch gestaltete Sicherungsring 8 fasst den Durchmesser des Anschlussteils 2 innerhalb der Nut 3 sicher ein und ist gegenüber von seiner Öffnung auf der Außenseite mit einer Abflachung 9 versehen.

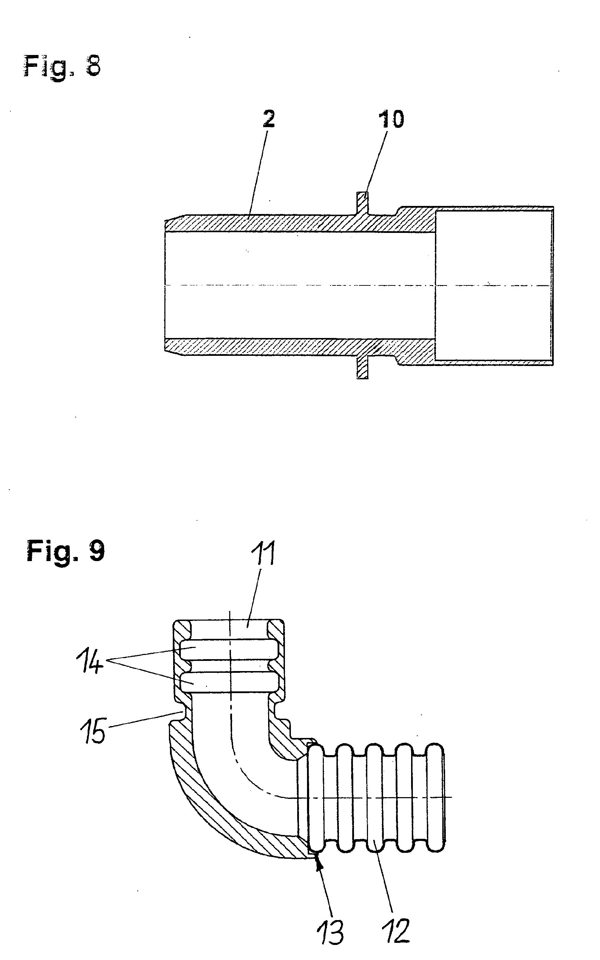

Alternativ zu einem Anschlussteil 2 mit einer Nut 3 und eingelegten Sicherungsringen 4, 8 kann auch gemäß Fig. 8 ein Anschlussteil 2 mit einem Bund 10 verwendet werden. Dieser ersetzt insbesondere den Sicherungsring 4 und bildet den Anschlag für die Halteklammer 5.

Gemäß den Fig. 9, 10, 11 und 12 wird ein Sicherungsring von innen her in ein Verbindungsteil 11 eingelegt. Dieses dient als Übergang zu einem Wellrohr 12 als Anschlussleitung zum Zu- und Ableiten der Wärmeträgerflüssigkeit.

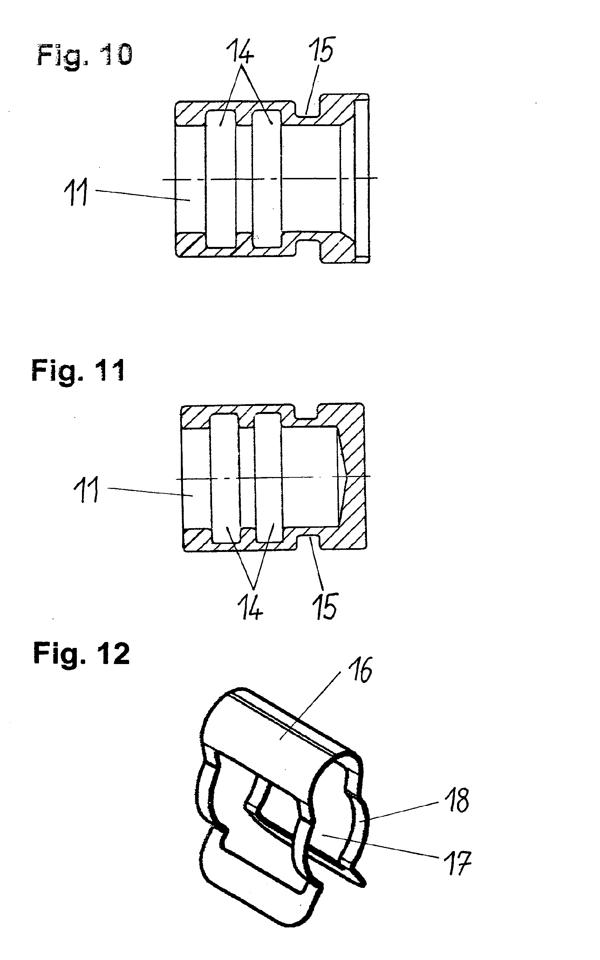

Das Verbindungsteil 11 kann als Bogen oder gerade ausgeführt sein. Es ist an einer Lötstelle 13 an einem Ende am Wellrohr 12 fixiert und besitzt am anderen Ende einen Anschlussbereich, welcher aus einer einem Wellrohr ähnlichen Innengeometrie mit zwei ringförmigen Nuten 14 für O-Ringe sowie aus einer ringförmigen Nut 15 auf dem Außenumfang besteht. Wenn das Verbindungsteil 11 gemäß Fig. 11 als Stopfen ausgeführt ist, besteht es ausschließlich aus dem vorstehend beschriebenen Anschlussbereich und eine Seite ist verschlossen.

Eine Halteklammer 16 besitzt eine Aussparung 17 zwischen äußeren Stegen 18. Die Halteklammer 16 ist so gestaltet, dass sie am Anschlussteil 2 den Sicherungsring 4 oder den Bund 10 sowie am Verbindungsteil 11 den Anschlussbereich außen übergreift und die Bauteile axial aneinander fixiert. Dabei greifen zwei gegenüberliegende Stege 18 in die ringförmige Nut 15 auf dem Außenumfang des Verbindungsteils 11 ein.

## Patentansprüche

1. Druckdichte Verbindung zwischen einem Wellrohr oder einem Verbindungsteil mit einer einem Wellrohr ähnlichen Geometrie und einem Anschlussteil, insbesondere für Sammel- oder Anschlussleitungen von Sonnenkollektoren, wobei das Anschlussteil das Ende einer im Sonnenkollektor angeordneten Sammelleitung bildet und in das Wellrohr eingreift und wobei mindestens ein O-Ring als Dichtung vorgesehen ist,
**dadurch gekennzeichnet, dass** das Anschlussteil (2) einen zylindrischen, dem Wellrohr (1) oder dem Verbindungsteil (11) zugeordneten Verbindungsbereich besitzt, welcher auf der vom freien Ende entfernten Seite mit einer Nut (3) zur Aufnahme eines Sicherungsringes (4, 7) oder einem umlaufenden Bund (10) versehen ist, und dass in mindestens zwei nach innen offene Wellen im Endbereich des Wellrohres (1) oder des Verbindungsteils (11) jeweils ein O-Ring (6) als Dichtung eingelegt ist.

2. Verbindung nach Anspruch 1,
**dadurch gekennzeichnet, dass** das Wellrohr (1) durch eine Anformung ein flanschartiges Ende besitzt, welches an einem Sicherungsring (4) in der Nut (3) des Anschlussteils (2) in axialer Richtung anliegt, dass eine Halteklammer (5) das flanschartige Ende des Wellrohres (1) zusammen mit dem Sicherungsring (4) oder dem Bund (10) übergreift und fixiert, und dass vorzugsweise in der ersten und zweiten Welle am Ende des Wellrohres (1) jeweils ein O-Ring (6) als Dichtung eingelegt ist.

3. Verbindung nach den Ansprüchen 1 oder 2,
**dadurch gekennzeichnet, dass** der symmetrisch gestaltete Sicherungsring (4) federnd ausgebildet ist und gegenüber seiner einseitigen Öffnung einen geringeren, elastischeren Querschnitt aufweist.

4. Verbindung nach einem der Ansprüche 1 bis 3,
**dadurch gekennzeichnet, dass** die Halteklammer (5) den Sicherungsring (4) oder den Bund (10), das flanschartige Ende sowie mindestens eine weitere Welle des Wellrohres (1) übergreift.

5. Verbindung nach einem der Ansprüche 1 bis 4,
**dadurch gekennzeichnet, dass** die Halteklammer (5) symmetrisch und annähernd U-förmig gestaltet ist, an beiden Schenkeln mit Durchbrechungen (7) zum Übergreifen von Wellrohrende und Sicherungsring (4) oder Bund (10) sowie mit nach außen gerichteten Abwinklungen am Schenkelende versehen ist, und dass der mittlere Bereich jedes Schenkels auf einem Teilstück etwa dem Radius von Wellrohr (1) und Anschlussteil (2) angepasst ist.

6. Verbindung nach Anspruch 1,
**dadurch gekennzeichnet, dass** in der ersten Welle am Ende des Wellrohres (1) oder des Verbindungsteils (11) ein Sicherungsring (8) von innen her eingelegt ist, welcher der Nut (3) am Anschlussteil (2) zugeordnet ist, in diese federnd einrastet und das Wellrohr (1) oder das Verbindungsteil (11) am Anschlussteil (2) fixiert, und dass vorzugsweise in der zweiten und/oder dritten Welle jeweils ein O-Ring (6) als Dichtung eingelegt ist.

7. Verbindung nach einem der Ansprüche 1 bis 6,
**dadurch gekennzeichnet, dass** das Verbindungsteil (11) an einem Ende an einer Rohrleitung fixiert ist und am anderen, dem Anschlussteil (2) zugeordneten Ende, einen Anschlussbereich besitzt, welcher aus einer einem Wellrohr ähnliche Innengeometrie mit mindestens zwei ringförmigen Nuten (14) sowie aus einer ringförmigen Nut (15) auf dem Außenumfang besteht.

8. Verbindung nach einem der Ansprüche 1 bis 7,
**dadurch gekennzeichnet, dass** das Verbindungsteil (11) als Stopfen ausgeführt ist und ausschließlich aus einem Anschlussbereich besteht, welcher eine einem Wellrohr ähnlichen Innengeometrie mit mindestens zwei ringförmigen Nuten (14) sowie eine ringförmige Nut (15) auf dem Außenumfang aufweist.

9. Verbindung nach einem der Ansprüche 1 bis 8,
**dadurch gekennzeichnet, dass** eine Halteklammer (16), insbesondere mit einer Aussparung (17) zwischen äußeren Stegen (18), am Anschlussteil (2) den Sicherungsring (4) oder den Bund (10) sowie am Verbindungsteil (11) den Anschlussbereich außen übergreift, wobei ein äußerer Steg (18) der ringförmigen Nut (15) auf dem Außenumfang des Verbindungsteils (11) zugeordnet ist.

10. Verbindung nach einem der Ansprüche 1 bis 9,
**dadurch gekennzeichnet, dass** der symmetrisch gestaltete Sicherungsring (8) sich über einen Kreisbogen von etwa 240 Grad erstreckt und gegenüber seiner Öffnung einen geringeren, elastischeren Querschnitt in Form einer Abflachung (9) auf der Außenseite besitzt.

11. Verbindung nach einem der Ansprüche 1 bis 10,
**dadurch gekennzeichnet, dass** das Anschlussteil direkt vom Ende einer Sammelleitung durch entsprechende Gestaltung, Bearbeitung und/oder Umformung gebildet ist.
